# EUROPÄISCHE PATENTSCHRIFT

(11) **EP 0 893 297 B1**
(45) Veröffentlichungstag und Bekanntmachung des Hinweises auf die Patenterteilung: **19.11.2003**
(21) Anmeldenummer: 98112118.9
(22) Anmeldetag: 01.07.1998
(51) Int. Cl.: B60K 37/06, H01H 13/70

(54) **Bedienelement**
Operating element
Elément de commande

(30) Priorität: 21.07.1997 DE 19731285
(43) Veröffentlichungstag der Anmeldung: 27.01.1999
(73) Patentinhaber: Bayerische Motoren Werke Aktiengesellschaft, 80788 München (DE)
(72) Erfinder: Kempf, Gero, Dr., 82024 Taufkirchen (DE); Haller, Rudolf, Dr., 80937 Muenchen (DE); Kuenzner, Hermann, 85356 Freising (DE); Kopf, Matthias, Dr., 81476 Muenchen (DE)

(56) Entgegenhaltungen:
- EP-A- 0 059 378
- EP-A- 0 746 006
- DE-A- 3 836 555
- US-A- 5 311 175

## Beschreibung

Die Erfindung bezieht sich auf ein Bedienelement mit den Merkmalen des Oberbegriffs von Patentanspruch 1.

Bei diesem Bedienelement kann es sich um beispielsweise einen Drehknopf oder um eine Fläche handeln, wie er/sie aus der DE 38 36 555 A bzw. der DE 44 43 912 A bekannt ist. Durch den Bediener kann das Bedienelement gedreht bzw. berührt werden und dadurch eine Auswahl des Menüs, der Funktion bzw. des Funktionswerts erfolgen. Die Funktionsauslösung kann dann durch eine (lokale) Linearbewegung des Bedienelements bzw. Druck auf die Oberfläche des Bedienelements erfolgen.

Ein Bedienelement mit den Merkmalen des Oberbegriffs des 1. Anspruchs ist bekannt aus US-A-5 311 175.

Es ist Aufgabe der Erfindung, den Gebrauchsnutzen des Bedienelements zu steigern.

Diese Aufgabe wird durch die Merkmale des Patentanspruchs 1 gelöst.

Während es bei den bekannten Bedienelementen in der Regel unbedingt erforderlich ist, die (Vor-)Auswahl von Menü, Funktion und/oder Funktionswert durch eine Bildschirmführung zu unterstützen (die jeweils angesprochene Funktion wird auf einem Bildschirm zusammen mit den anderen Funktionen dargestellt und demgegenüber optisch beispielsweise durch eine Helltastung hervorgehoben), wobei die Bilschirminformation dominiert, wird nunmehr das Schwergewicht der Informationsvermittlung auf das Bedienelement selbst gelegt. Im Extremfall kann es sogar möglich sein, auf eine derartige Bildschirmunterstützung zu verzichten.

Hierzu wird die Oberfläche des Bedienelements entsprechend der angesprochenen bzw. anzusprechenden Funktion in ihrer Gestalt verändert. Der Bediener erhält dadurch taktil eine Information über die jeweils vorliegende ausgewählte bzw. auswählbare Funktion. Er kann im Falle des Drehschalters erkennen, ob es sich dabei beispielsweise um eine Funktion handelt, die durch die Axialbewegung des Dreh-/Druckschalters noch ausgewählt werden muß bzw. ob diese Auswahl bereits erfolgt ist. Beide Fälle unterscheiden sich für den Bediener fühlbar durch eine entsprechende unterschiedliche Oberflächenstruktur und/oder Form des Dreh-/Druckschalters.

Die anhand einer Funktion erläuterte Wirkungsweise des Bedienelements gilt selbstverständlich entsprechend auch im Falle eines von mehreren auswählbaren Menüs bzw. eines einstellbaren bzw. auswählbaren Funktionswerts.

Bei dem Bedienelement mit rotationssymmetrischer Oberfläche, erfolgt die Veränderung durch ein Heraustreten bzw. zur Rotationsachse hin folgendes Ausweichen von Bereichen der Oberfläche.

Anhand der Zeichnung ist die Erfindung weiter erläutert. Es zeigt
- Fig. 1: ein Bedienelement mit ebener Oberfläche (nicht Teil des Schutzumfanges des unabhängigen Anspruchs)
- Fig. 2: ein Bedienelement mit rotationssymmetrischer Oberfläche, beide jeweils in zwei voneinander verschiedenen Zuständen.

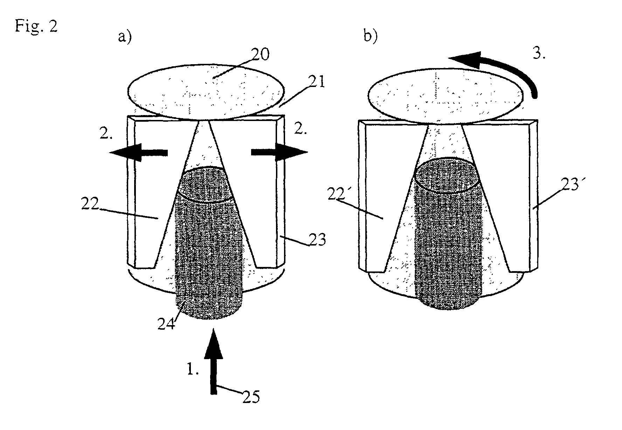

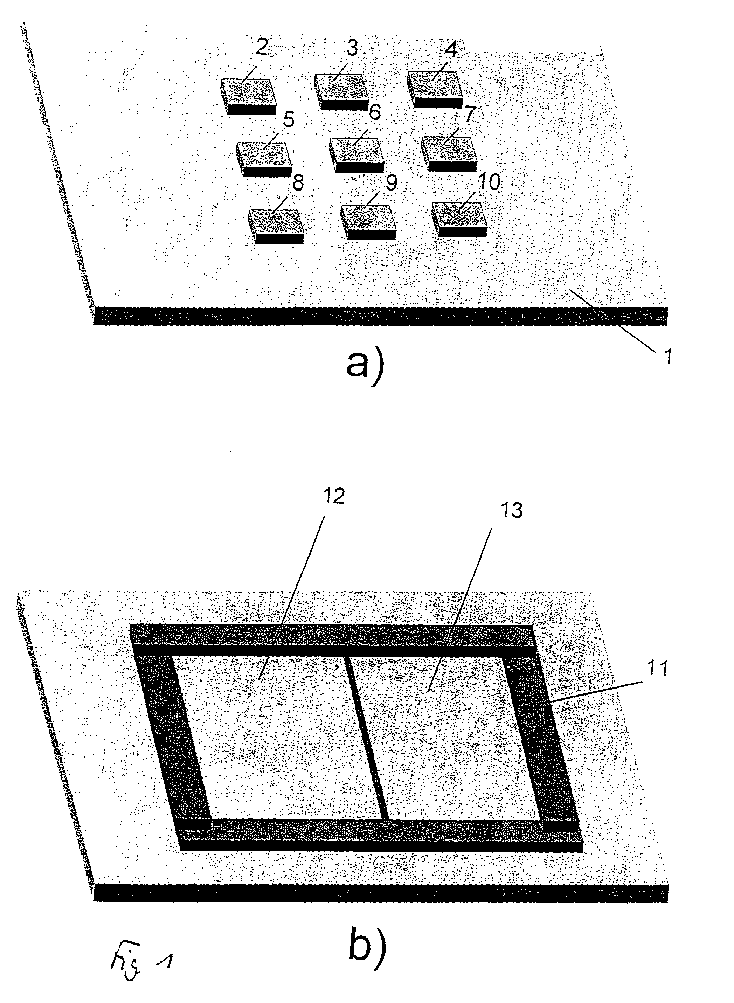

Beim Ausführungsbeispiel von Fig. 1 (nicht Teil des Schutzumfanges des unabhängigen Anspruchs) handelt es sich um ein Bedienelement 1 mit einer ebenen Oberfläche. Diese ist unter der Bezeichnung Touchpad bekannt. Gegenüber einem konventionellen Touchpad besitzt die Oberfläche nunmehr variable, tastbare Strukturen 2 bis 10 in einem Funktionszustand, wie er im Teilbild a) dargestellt ist bzw. eine rahmenähnliche Oberflächenstruktur 11, wie sie im Teilbild b) dargestellt ist.

Die in den beiden Teilbildern a) und b) dargestellten Ausführungen sollen lediglich beispielhaft verstanden werden und sind keinesfalls als Beschränkung zu verstehen. Mit der Oberflächenstruktur von Teilbild a) wird es beispielsweise möglich, eine von neun gleichwertigen Funktionen auszuwählen. Hierzu wird durch Berühren einer der lokalen Erhebungen 2 bis 10 die zugeordnete Funktion vorausgewählt und durch Drücken, beispielsweise durch Überwinden eines lokalen Druckpunkts, diese Funktion dann definitiv ausgewählt bzw. ausgelöst.

Durch die Oberflächenstruktur von Teilbild b) wird es möglich, zwischen zwei Menüs auszuwählen, indem einer der beiden durch die geteilte Rahmenstruktur gebildeten Teilbereiche 12 bzw. 13 berührt wird. Auch hier kann ein Druckpunkt vorgesehen sein, der durch ein lokales Eindrücken der Oberfläche 12 bzw. 13 überwunden werden muß und der erst dann zum definitiven Auswählen des zugehörigen Menüs führt.

Die technische Realisierung der in den Teilbildern a) und b) beispielhaft dargestellten Oberflächenstruktur kann z. B. in Form einer Matrix von in zwei Stellungen (hoch, tief) rastbaren elektromechanisch betätigten Stempeln (nicht dargestellt) bestehen, die mit einer berührsensitiven dehnbaren Folie überspannt sind. Die Stempel sind in beiden Stellungen drucksensitiv und geben bei Überschreiten eines Grenzdrucks mit spürbarer Rastung etwas nach. Die Stempel können auch selbst drucksensitiv gemacht werden.

Bei der Erfindung wie dargelegt in Fig. 2 handelt es sich um ein in zwei Drehrichtungen drehbares Bedienelement 20. Durch zwei aus der Oberfläche 21 hervortretende Flügel 22 und 23 ist es möglich, eine variable taktile Rückmeldung zu geben. Die Flügel 22 und 23 können, wie im Teilbild a) dargestellt, in der Oberfläche liegen und damit nicht fühlbar sein bzw. wie im Teilbild b) dargestellt aus der Oberfläche hervortreten und damit für den Bediener spürbar sein. Zur Bewegung der Flügel 22 und 23 aus der Oberfläche 21 heraus kann ein Stempel 24 dienen, der etwa konzentrisch zum Bedienelement 20 angeordnet und in der Achsenrichtung beweglich ist (Pfeil 25). Wird der Stempel entgegen der durch den Pfeil 25 angegebenen Richtung bewegt, so weichen die Flügel 22 und 23 bei Berühren an ihren Längskanten 22' und 23' aus und gehen zurück in die Oberfläche 21. Sie treten dann nicht mehr taktil in Erscheinung.

Durch die Formänderung wird es möglich, eine variable taktile Rückmeldung zu geben. Das in Fig. 2 dargestellte haptische Stellelement 20 kann entsprechend der jeweils auszuwählenden bzw. auswählbaren Funktion (Menü, Funktionswert) programmierbar sein und dem Bediener zu erkennen geben, ob der jeweils vorliegende Bedienzustand durch eine Drehbewegung des Stellelements 20 verändert werden kann - in diesem Fall sind die beiden Flügel 22 und 23 wirksam, d. h. sie treten aus der Oberfläche 21 hervor - bzw. ob der dann gegebene Bedienzustand durch eine Axialbewegung des Stellelements 20 auswählbar ist - in diesem Fall sind die beiden Flügel 22 und 23 nicht spürbar.

Durch die in Fig. 1 und 2 dargestellten Bedienelemente wird dem Bediener eine taktile Rückmeldung entsprechend dem jeweils vorliegenden Menü/Funktion bzw. Funktionswert gegeben. Er erhält dadurch taktil eine Information darüber, wie er den Bedienvorgang fortsetzen bzw. abschließen kann.

## Patentansprüche

1. Bedienelement für eine Einrichtung mit mehreren wählbaren Menüs, Funktionen und/oder Funktionswerten, mit einer Oberfläche (21), die durch den Bediener erfassbar ist und über die die Auswahl durch eine Bewegung der Oberfläche vornehmbar ist und die in ihrer Gestalt entsprechend dem/der gewählten und/oder auswählbaren Menü, Funktion und/oder Funktionswert veränderbar ist, **dadurch gekennzeichnet, dass** eine Auswahl durch Drehen der Oberfläche (21) stattfindet , dass die Oberfläche im wesentlichen rotations-symmetrisch ist und dass die Veränderung durch bezüglich der achsialen Oberfläche (21) heraustretende bzw. eingezogene Bereiche (22,23) erfolgt.

2. Bedienelement nach Anspruch 1, **dadurch gekennzeichnet, dass** die Bereiche (22,23) als Flügel ausgebildet sind, die aus der Oberfläche vortreten oder in dieser verlaufen.

3. Bedienelement nach Anspruch 2, **dadurch gekennzeichnet, dass** die Flügel (22,23) aus der Oberfläche (21) hervortreten, wenn der dann gegebene Bedienzustand durch eine Axialbewegung des Stellelements (20) auswählbar ist.

## Claims

1. An operating element for a device comprising a number of selectable menus, functions and/or function values, comprising a surface (21) which can be handled by the user and moved in order to make a selection and is variable in shape depending on the chosen and/or selectable menu, function and/or function value, **characterised in that** the selection is made by rotating the surface, the surface is substantially axially symmetrical and the change is made via regions (22, 23) which project or are retracted relative to the axial surface (21).

2. An operating element according to claim 1, **characterised in that** the regions (22, 23) are in the form of vanes which project from or move into the surface.

3. An operating element according to claim 2, **characterised in that** the vanes (22, 23) project from the surface (21) when the operating state is selectable by axial movement of the adjusting element (20).

## Revendications

1. Elément de commande pour un dispositif comportant plusieurs menus, fonctions et/ou valeurs fonctionnelles pouvant être sélectionnés, lequel comprend une surface (21) pouvant être saisie par l'utilisateur, à l'aide de laquelle une sélection peut être effectuée par un déplacement de la surface, et dont la forme peut changer en fonction du menu, de la fonction et/ou de la valeur fonctionnelle sélectionnée et/ou pouvant être sélectionnée,
**caractérisé en ce qu'**
une sélection est effectuée par rotation de la surface (21), la surface est essentiellement de forme circulaire symétrique, et la modification est réalisée par des secteurs (22, 23) pouvant ressortir ou s'enfoncer par rapport à la surface axiale (21).

2. Elément de commande selon la revendication 1,
**caractérisé en ce que**
les secteurs (22, 23) sont en forme d'aile qui ressortent de la surface ou sont à l'intérieur de celle-ci.

3. Elément de commande selon la revendication 2,
**caractérisé en ce que**
les ailes (22, 23) ressortent de la surface (21) lorsque l'état indiqué peut être sélectionné par un déplacement axial de l'élément de commande (20) .
